# EUROPEAN PATENT SPECIFICATION

(11) **EP 2 429 072 B1**
(45) Date of publication and mention of the grant of the patent: **12.12.2018**
(21) Application number: 11179172.9
(22) Date of filing: 29.08.2011
(51) Int. Cl.: H02P 7/29, B60L 15/20

(54) **Motor control apparatus**
Motorsteuerungsvorrichtung
Appareil de commande de moteur

(30) Priority: 10.09.2010 JP 2010202534
(43) Date of publication of application: 14.03.2012
(73) Proprietor: Calsonic Kansei Corporation, Saitama-shi Saitama 331-8501 (JP)
(72) Inventor: Sunaga, Hideki, Saitama-shi, Saitama 331-8501 (JP)
(74) Representative: Grünecker Patent- und Rechtsanwälte PartG mbB

(56) References cited:
- JP-A- H1 169 874
- JP-A- H08 282 523
- JP-A- 2002 142 494
- JP-A- 2006 304 571

## Description

### FIELD

The present invention relates to a motor control apparatus for a vehicle. Particularly, it relates to a motor control apparatus which can change an output smoothly.

### BACKGROUND

Document JP2006304571 A discloses a DC motor with a plurality of pairs of brushes which are connected to two FETs. Furthermore in the related art, a control circuit for controlling a DC motor in an electric vehicle such as an electric golf cart is known as a motor control
apparatus (see JP-A-II-69874, for instance).

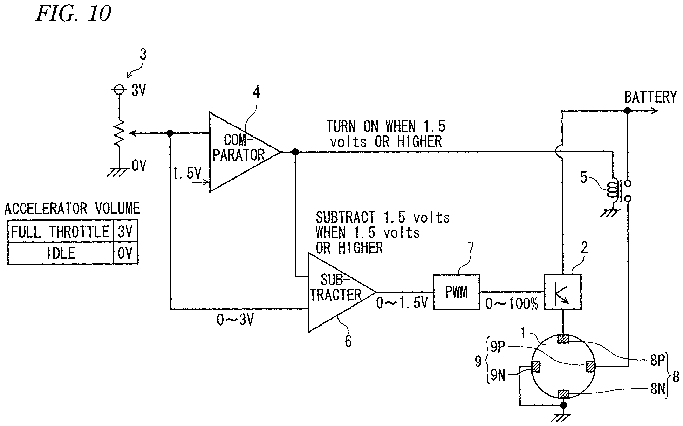

For example, as shown in Fig. 10, a switching circuit 2 constituted by an FETor the like is connected to a motor I having two brush pairs 8 and 9 (8P, 8N and 9P, 9N).

An accelerator volume 3 for generating a voltage corresponding to the position of an accelerator pedal is connected to the switching circuit 2 through a comparator 4 which is turned on in response to a voltage of at least 1.5 volts applied thereto. A relay 5 is controlled in accordance with a comparison result of the comparator 4.

In addition, a pulse width modulator (PWM) control circuit 7 is connected to a subtraction circuit 6 for subtracting a reference voltage. The PWM control circuit 7 controls and drives the switching circuit 2 in accordance with a duty ratio corresponding to the output voltage of the subtraction circuit 6.

When the output voltage of the accelerator volume 3 is within a range smaller than 1.5 volts which is the reference voltage, the paired brushes 8 (8P and 8N) of the motor 1 are used so that the PWM control circuit 7 can perform PMW control for variable control on the rotation number of the motor 1.

Further, when the output voltage of the accelerator volume 3 is within a range of from 1.5 volts to 3 volts, a current is applied to the other paired brushes 9 (9P and 9N) in addition to the variable control based on the PWM control using the paired brushes 8 (8P and 8N) of the motor 1. Thus, the load on the switching circuit 2 can be reduced.

### SUMMARY

In a related-art motor control apparatus configured thus, assume that the number of motors 1 to be controlled and driven is increased, for example, to provide a plurality of blowing fans for cooling, or the motor 1 is replaced by another motor 1 capable of exerting a large output so as to increase the work which can be attained by the single motor 1. In such a case, it is necessary to use two or more existing PWM control circuits 7, or use an expensive large-capacity PWM control circuit 7.

It is known that noise is generated with the ON/OFF operation of the relay 5. When the relay 5 is switched from the ON state to the OFF state, the output may be overshot to the lower side. On the contrary, when the relay 5 is switched from the OFF state to the ON state, the output may be overshot to the higher side.

Overshoots generated due to such noises are on a short-time noise level (glitch current projecting over time base) in a motor control apparatus which is not provided with soft start control or soft stop control. Due to the inertia of the motor 1, a blowing fan, etc., the overshoots may be substantially insignificant as a fluctuation of the rotation number.

On the contrary, assume that PWM control is performed by a motor control apparatus provided with soft start control or soft stop control. In this case, when the relay 5 is opened/closed to switch the ON/OFF state thereof, the aforementioned noise is emphasized to appear in an output voltage, which may affect the rotational driving frequency of the motor 1.

It is therefore an object of the invention to provide a motor control apparatus which can use a configuration of inexpensive parts to smoothly control the rotational driving frequency of a high-capacity motor or the rotational driving frequencies of a plurality of motors even if the work to be driven and controlled is increased by driving of the high-capacity motor or the plurality of motors.

In order to solve the foregoing problem, a motor control apparatus according to a first configuration of the invention includes: a motor that includes a plurality of pairs of brushes; a control module that supplies control currents to the pairs of brushes correspondingly; a plurality of relay units that connect and disconnect the control currents supplied from the control module so that when each of the relay units is in an ON state where the relay unit connects a control current, the relay unit applies the control current to any one of the pairs of brushes to thereby generate a rotationally driving force, and when the relay unit is in an OFF state where the relay unit disconnects the control current, the relay unit suspends the control current; and a relay changeover portion that changes over between the ON state and the OFF state of the plurality of relay units, wherein, when one of the relay units is changed over between the ON state and the OFF state by the relay changeover portion so as to select a pair of brushes to which a current is to be applied, the control module changes over the other relay unit to a current-conductive state while temporarily suspending a control current from the one relay unit, so that a reference current equivalent to the control current which has been applied to the one relay unit is supplied from the other relay unit while a control current for variably controlling a rotation number of the motor together with the reference current is outputted from the one relay unit.

According to a second configuration of the invention, there is provided a motor control apparatus according to the first configuration, further including a plurality of motors, wherein the control module comprises a waveform generating portion that generates waveforms with the same cycle, wherein each of the plurality of motors is connected so that control currents obtained by the waveform generating portion are supplied to the motors respectively.

According to a third configuration of the invention, there is provided a motor control apparatus according to the first configuration, wherein the control module has soft start control function or soft stop control function, and cancels the soft start control or the soft stop control when one of the relay units is changed over between the ON state and the OFF state by the relay changeover portion.

In the motor control apparatus according to the first configuration, a control current for controlling the rotation number on the lower speed rotation side is applied to the motor by one relay unit selected by the relay changeover portion.

The control current is applied to one pair of brushes of the motor so that the control module can perform variable control on the rotation number of the motor on the lower speed rotation side.

When the rotation number of the motor reaches a predetermined rotation number, the control portion temporarily suspends the control current which has been supplied.

The other relay unit is connected to be turned ON to apply a reference current equivalent to the control current, so that the rotation number of the motor can be kept.

During the changeover of each relay unit by the relay changeover portion, the control current is prevented from flowing from the control module. Thus, noise hardly occurs.

After the other relay unit is changed over, a reference current equivalent to the control current of the one relay unit is applied to the brushes of the motor from the other relay unit.

The control current tuned with the reference current is used together with the reference current so as to be supplied to the motor again from the one relay unit to thereby perform variable control on the rotation number of the motor on the higher speed rotation side in the same manner as the control current for variable control on the rotation number of the motor on the lower speed rotation side.

In this manner, during the changeover of the other relay unit to the ON state, the control current and the reference current are prevented from flowing. Thus, there hardly occurs a noise or a potential difference large enough to produce a fluctuation in the rotation number of the motor.

Thus, even when a large-capacity motor or the like is used to increase the work to be driven and controlled, a control current for variably controlling the rotation number of the motor in the same manner as on the lower speed rotation side using the control portion in the same manner as described above is supplied together with the reference current. Thus, the motor can be synchronized easily so as to be variably controlled smoothly from the lower speed rotation side to the higher speed rotation side.

In addition, it will go well if one control portion which can perform similar variable control on the lower speed rotation side and the higher speed rotation side of the motor is provided. Thus, the number of parts is not increased so that increase in manufacturing cost can be suppressed.

Further, the other relay unit is connected by the relay changeover portion to provide a reference current. In this state, a control current is applied from the control portion through the one relay unit having the same capacity so that rotations in a rotation range on the higher speed rotation side can be controlled in the same manner as in a rotation range on the lower speed rotation side.

Thus, the reference current provided by the other relay unit is also used to increase the rotation number of the motor when the capacity of each relay unit is changed over between the lower speed rotation side and the higher speed rotation side. Thus, the capacity of the one relay unit can be reduced, and a relay unit whose capacity is about half as high as the maximum output can be used as the one relay unit.

Accordingly, it is possible to obtain a motor control apparatus which can use a configuration of inexpensive parts to smoothly perform rotation control.

In addition, in the motor control apparatus according to the second configuration, for example, two blowing fans as rotationally driven members are rotationally driven by a plurality of motors, e.g. two motors. Also on this occasion, a control current equivalent to a control current on the lower speed rotation side can be sent from the control module so as to be used as a control current on the higher speed rotation side.

To this end, the control current on the lower speed rotation side, which is sent from the single control module to the two motors, is used together with a reference current given to the brushes through the other relay unit turned on by the relay changeover portion.

Accordingly, control on the higher speed rotation side can be performed on the reference current using a control current equivalent to the control current used for control on the lower speed rotation side, so that the rotation numbers of the two motors can be synchronized concurrently as soon as the other relay unit is changed over.

In addition, the control signal sent from the control module is used as a control current on the lower speed rotation side and the higher speed rotation side so as to be shared between variable ranges thereof. Thus, the rotation numbers of the two blowing fans can be tuned with each other easily even if there occurs a fluctuation in the rotation numbers of the blowing fans.

Accordingly, the spread of a frequency band where noise may occur can be suppressed to reduce the fear that the noise may interfere with a radio band or the like.

In addition, a control start voltage can be tuned with a voltage of the reference current when control of the motors on the higher speed rotation side is started. It is therefore possible to smoothly start variable control on the rotation numbers of the motors.

Thus, occurrence of noise can be suppressed even if a plurality of motors are rotationally driven concurrently.

In addition, the provided motors are rotationally driven by control currents obtained from the same control module and with the same cycle provided by the waveform generating portion.

On this occasion, the rotations of the motors are surely synchronized with each other by the control currents generated by the same control module. Thus, the motors can be rotationally driven with the same phase.

Thus, the rotation numbers of the motors have good followability with respect to the control currents. Even during variable control of the rotation numbers of the motors, occurrence of resonance can be prevented so that occurrence of unpleasant sound such as howling can be suppressed.

In addition, noise generated due to rotations in rotationally driven members such as blowing fans to be rotationally driven by the motors can be collected in a desired acoustic range to reduce the width of a noise range so that sound-proofing or vibration-proofing measures such as use of a vibration-proof structure effective in the narrow noise range can be taken easily.

Further, in the motor control apparatus according to the third configuration, the soft start control or the soft stop control is cancelled to be disabled from operating by the control module when the ON/OFF state of any one of the relay units is changed over by the relay changeover portion.

Thus, output fluctuation or switching noise promoted at the changeover time is suppressed by the soft start control or the soft stop control so that rotational driving of the motor can be controlled more smoothly.

### BRIEF DESCRIPTION OF THE DRAWINGS

A general configuration that implements the various features of the invention will be described with reference to the drawings. The drawings and the associated descriptions are provided to illustrate embodiments of the invention and should not limit the scope of the invention.
Fig. 1 is a circuit diagram for explaining the overall configuration of a motor control apparatus according to an embodiment of the invention.
Fig. 2 is a schematic block diagram for explaining the configuration of a fan control module (FCM) in the motor control apparatus according to the embodiment of the invention.
Fig. 3 is a graph for explaining the relation between the operation of each relay unit and the driving control of the rotation number of a motor in the motor control apparatus according to the embodiment of the invention.
Fig. 4 is a circuit diagram for explaining the overall configuration of a motor control apparatus as a comparative example to be compared with the embodiment of the invention.
Fig. 5 is a graph for explaining the relation between the operation of each relay unit and the driving control of the rotation number of a motor in the motor control apparatus as the comparative example to be compared with the embodiment of the invention.
Fig. 6 is a graph showing a step-up state in soft start assumed in the invention, starting at ON time.
Fig. 7 is a graph showing a step-down state in soft stop assumed in the invention, starting at OFF time.
Fig. 8 is a circuit diagram for explaining the overall configuration of a motor control apparatus according to a first example of the embodiment of the invention.
Fig. 9 is a graph for explaining the relation between the operation of each relay unit and the driving control of the rotation number of a motor in the motor control apparatus according to the first example of the embodiment of the invention.
Fig. 10 is a circuit diagram for explaining the overall configuration of a motor control apparatus in a related-art example.

### DETAILED DESCRIPTION OF THE EMBODIMENTS

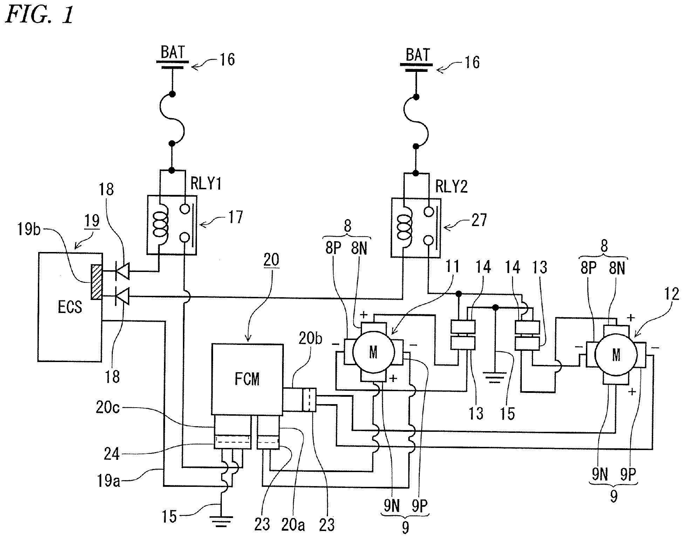

Next, a motor control apparatus according to an embodiment for carrying out the invention will be described with reference to Figs. 1 to 9.

Portions the same as or equivalent to those in the related-art example are referred to by the same numerals correspondingly in the following description.

First, description will be made on the configuration of the motor control apparatus according to the embodiment for use in cooling fans of a vehicle.

In this embodiment, as shown in Fig. 1, two pairs of brushes 8 and 9 (8P, 8N and 9P, 9N) are provided in each of a first motor 11 and a second motor 12.

One of the two pairs, that is, the brushes 8P and 8N are connected to relay-side connectors 14 and 14 through motor-side first connectors 13 and 13 respectively.

One terminal of each relay-side connector 14 and 14 is connected to an earth line 15 while the other terminal is connected to a second relay unit 27 provided with a battery power supply 16.

The second relay unit 27 is connected to an engine control system (ECS) 19 through a rectifier 18. The engine control system 19 principally controls a not-shown engine. The engine control system 19 is provided with a relay changeover portion 19b as a part of a control portion.

By the engine control system 19, a relay switch of the second relay unit 27 can be controlled to perform ON/OFF operation. Thus, in the ON state, driving currents for driving the first motor 11 and the second motor 12 can be supplied to one of the pairs, that is, the brushes 8P and 8N.

Each motor-side second connector 23 and 23 is connected to the other pair, that is, the brushes 9P and 9N. A first driving current m1 and a second driving current m2 respectively supplied from module-side connectors 20a and 20b provided in a fan control module (FCM) 20 as a part of the control portion can be supplied to the brushes 9P and 9N of the first and second motors 11 and 12 respectively.

The rotation numbers of fans or the like pivotally attached to rotating shafts of the first and second motors 11 and 12 are variably controlled in accordance with increase/decrease of duty ratios provided for the first and second driving currents m1 and m2 respectively.

The fan control module 20 is provided with a module-side input connector 20c. An earth line 15 is provided in an input-side connector 24 connected to the module-side input connector 20c. A signal line 19a from the engine control system 19 is connected to the input-side connector 24 and a battery power supply 16 is connected to the input-side connector 24 through a first relay unit 17.

The first relay unit 17 is connected through a rectifier 18 to the relay changeover portion 19b provided in the engine control system 19 so that pulse width modulation (PWM) driving power to be supplied to the fan control module 20 from the battery power supply 16 can be ON/OFF controlled.

When the first relay unit 17 is in the ON state, the first and second driving currents m1 and m2 are outputted from the fan control module 20 to the brushes 9P, 9N ... of the first and second motors 11 and 12 respectively.

In this embodiment, an intended rotation number signal is sent to the fan control module 20 through the signal line 19a in accordance with an intended rotation number set in the engine control system 19.

Further, in this embodiment, the relay changeover portion 19b is used for ON/OFF controlling the first and second relay units 17 and 27 so that the first and second driving currents m1 and m2 as control currents supplied from the fan control module 20 can be electrically connected/disconnected to perform changeover in a short time for keeping/suspending their output states individually.

To this end, changeover between so-called brush control and so-called PWM control is performed to control and change over the conducting state of each of the first and second driving currents m1 and m2 to either the brush pair 8 (8P and 8N) or the brush pair 9 (9P and 9N) which generates a rotationally driving force.

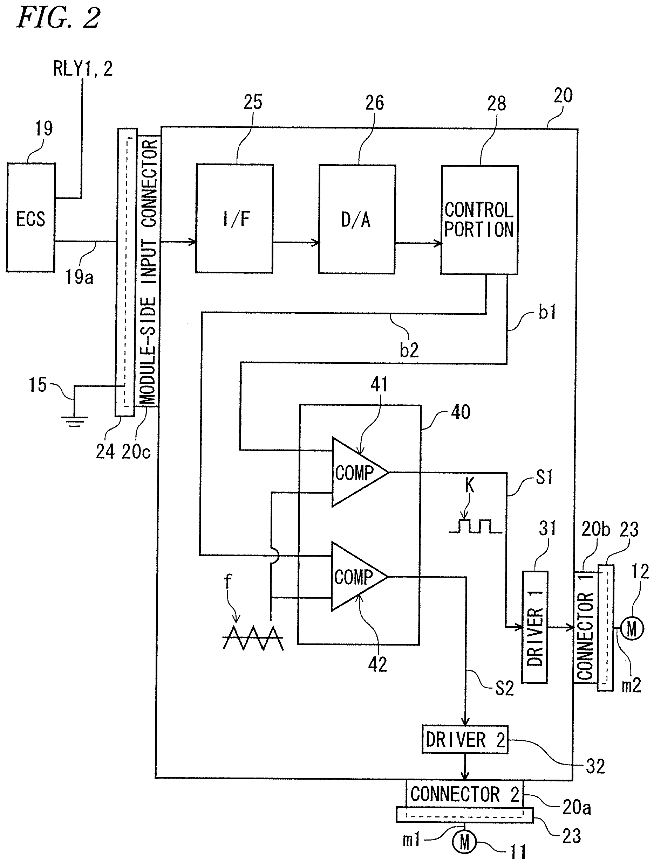

Next, the configuration of the fan control module 20 will be described in detail with reference to Fig. 2.

The fan control module 20 in this embodiment is provided with an interface portion 25 which is connected to the module-side input connector 20c so as to receive the intended rotation number signal.

That is, the input-side connector 24 is connected to the module-side input connector 20c so as to receive the intended rotation number signal outputted through the signal line 19a from the engine control system 19 which controls ON/OFF operations of the first relay unit 17 and the second relay unit 27. The signal line 19a is used for connecting the input-side connector 24 and the engine control system 19 with each other.

The interface portion 25 is connected through a D/A conversion circuit 26 to a control portion 28 provided in the fan control module 20. A voltage supplied from the input-side connector 24 is smoothed by the D/A conversion circuit 26.

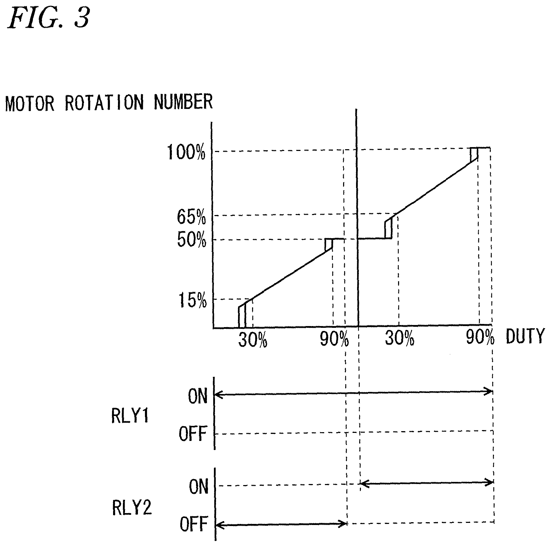

Further, when the intended rotation number set in the engine control system 19 in advance is achieved, the brushes (8P and 8N or 9P and 9N) for generating a rotationally driving force in each of the first and second motors 11 and 12 are selected by the relay changeover portion 19b, and the first and second relay units 17 and 27 are changed over in the control portion 28. On this occasion, the first relay unit 17 is in the ON state as shown in Fig. 3. Thus, the first driving current m1 and the second driving current m2 which can be supplied from the fan control module 20 are suspended temporarily, and then the second relay unit 27 is changed over to the ON state where the second relay unit 27 can conduct the currents.

The control portion 28 is connected to a PWM carrier generating portion 40 as a waveform generating portion so as to supply a first control signal b1 and a second control signal to a pair of first and second comparators 41 and 42 provided in the PWM carrier generating portion 40, respectively.

The first control signal b1 and the second control signal b2 are supplied to the first comparator 41 and the second comparator 42 in the PWM carrier generating portion 40 respectively, while sawtooth waves f with the same certain frequency are supplied thereto respectively.

The first control signal b1 and the second control signal b2 are compared with the sawtooth waves f respectively, and formed into a first PWM duty signal S1 and a second PWM duty signal S2 like rectangular waves k whose duty ratios can be changed in accordance with voltages of the first control signal b1 and the second control signal b2 respectively. The first PWM duty signal S1 and the second PWM duty signal S2 are outputted from the PWM carrier generating portion 40.

In this embodiment, the first PWM duty signal S1 and the second PWM duty signal S2 are respectively outputted to a first driver portion 31 and a second driver portion 32 which are provided in the fan control module 20 and constituted by MOSFETs or the like.

The first PWM duty signal S1 and the second PWM duty signal S2 are amplified as driving currents by the first driver portion 31 and the second driver portion 32, and outputted as the first driving current m1 and the second driving current m2 to the brushes 9P and 9N of the first motor 11 and the brushes 9P and 9N of the second motor 12 connected through the module-side connectors 20a and 20b and the motor-side second connectors 23 and 23, respectively. The first driving current m1 and the second driving current m2 have the same duty ratio.

Thus, the rotating shaft of the first motor 11 and the rotating shaft of the second motor 12 which rotationally drive a pair of fans respectively can rotate the fans with the same rotation number and in sync with each other.

In addition, in the control portion 28, the paired brushes 8 or 9 (8P and 8N or 9P and 9N) for generating a rotationally driving force for each of the first and second motors 11 and 12 are selected, and the first and second relay units 17 and 27 are changed over when the duty ratios (30% to 90%) are being increased (or at the time point when the duty ratios reach about 90%), as shown in Fig. 3.

That is, in this embodiment, the first driving current m1 and the second driving current m2 which are outputted from the first driver portion 31 and the second driver portion 32 and which can be applied to the brushes 9 are controlled with a duty ratio (30% to 90%) in a lower speed rotation side range where the first and second motors 11 and 12 are rotationally driven with rotation numbers as high as 0% to 50% of their maximum rotation numbers.

On the other hand, a higher speed side range where the first and second motors 11 and 12 are rotationally driven with rotation numbers as high as 60% to 100% of the maximum rotation numbers is referred to as a higher speed rotation side range. Within the rotation number range, the first driving current m1 and the second driving current m2 which are outputted from the first driver portion 31 and the second driver portion 32 and which can be applied to the brushes 9 are controlled with a duty ratio (30% to 90%). Thus, changeover control can be made smoothly between the lower speed rotation side range and the higher speed rotation side range.

In the higher speed rotation side range, the second relay unit 27 is turned ON under the control of the relay changeover portion 19b. Thus, a reference current bm is supplied from the second relay unit 27 to the brushes 8 and 8 of each first, second motor 11 and 12 in advance.

When the first and second relay units 17 and 27 are changed over, control currents from the first relay unit 17 are temporarily suspended, and the second relay unit 27 is changed over to the ON state where the second relay unit 27 can conduct currents.

In the embodiment, further, changeover is performed at a timing before the rotation numbers of the first and second motors 11 and 12 reach 50% to 65% of their maximum rotation numbers, so as to further suppress overshoot. In addition, a predetermined hysteresis is provided to prevent unnecessary hunting.

A changeover point is set between the lower speed side range and the higher speed side range so that the reference current bm as a standard for voltages applied to the brushes 8 and 8 by the second relay unit 27 becomes a constant multiple of a base voltage b (bm=a·b (a: constant; a=2 in this embodiment)). As soon as the output of each first, second motor 11, 12 reaches an output with a duty ratio of 90% in the lower speed rotation side range, changeover is performed to apply the reference current bm so that the rotation numbers of the motors on the lower speed side can reach about 50% of their maximum rotation numbers corresponding to the rated values of the first and second motors 11 and 12.

In addition, in this embodiment, the duty ratios given to the first driving current m1 and the second driving current m2 are adjusted so that the rotation numbers of the motors on the higher speed side can be set at about 100% of the maximum rotation numbers so as to obtain a good driving efficiency.

Further, when the first relay unit 17 moves from the ON state to the OFF state, current conduction to the brushes 9 and 9 is resumed to bring the base voltage b of the first control signal b1 and the second control signal b2 into the state where the duty ratios of the first driving current m1 and the second driving current m2 are lower than about 30% (preferably about 0%). Thus, the base voltage b is tuned with the reference current bm which is to the same with the maximum current values at the suspending time.

In this manner, the power supplied from the first relay unit 17 resumed with a comparatively low duty ratio is controlled variably in the higher speed rotation side range so that the duty ratio can be increased/decreased (30% to 90%) to prevent interference with the reference current bm supplied from the second relay unit which is in the ON state. Thus, overshoot and noise can be prevented from occurring.

In this embodiment, the second relay unit 27 is changed over to the ON state where the second relay unit 27 can conduct the currents in the state that the power supplied to the fan control module 20 has been temporarily suspended by the first relay unit 17 so that the first driving current m1 and the second driving current m2 are not supplied to the brushes 9 and 9 at all.

Due to the second relay unit 27, the reference current bm which is to the same as the maximum current value at the suspending time begins to be supplied from the battery power supply 16 through the second relay unit 27. In this state, variable control in the higher speed rotation range is started by the control portion 28.

On this occasion, the first and second control signals b1 and b2 outputted from the control portion 28 provided in the fan control module 20 are supplied to the first comparator 41 and the second comparator 42 respectively together with the sawtooth waves f sent from the single PWM carrier generating portion 40. Thus, the first and second control signals b1 and b2 are outputted as the first and second PWM duty signals S1 and S2 in synchronization with each other.

Further, in this embodiment, a plurality of motors, that is, the first motor 11 and the second motor 12 are provided with the brush pairs 9 and 9 being connected to the first driver portion 31 and the second driver portion 32 respectively.

The PWM duty signals S1 and S2 are amplified by the first driver portion 31 and the second driver portion 32 respectively, and outputted to the module-side connectors 20a and 20b located outside the housing of the fan control module 20, with the same cycle and in sync with each other, so as to serve as the first driving current m1 and the second driving current m2 which will be supplied to the first motor 11 and the second motor 12 respectively.

The motor-side second connectors 23 and 23 connected to the brushes 9 and 9 are removably connected to the module-side connectors 20a and 20b provided in the fan control module 20 respectively.

Then, the first driving current m1 and the second driving current m2 which are compared and generated by the PWM carrier generating portion 40 using one sawtooth wave f provided in the same control portion 28 and which configure of PWM Duty control currents with the same cycle and in synchronization with each other are supplied to the first motor 11 and the second motor 12 concurrently.

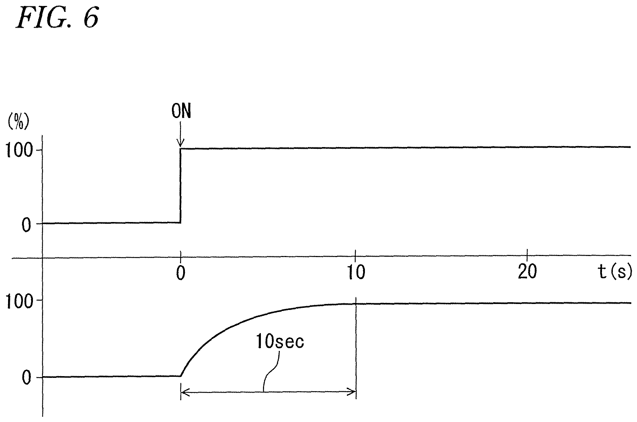

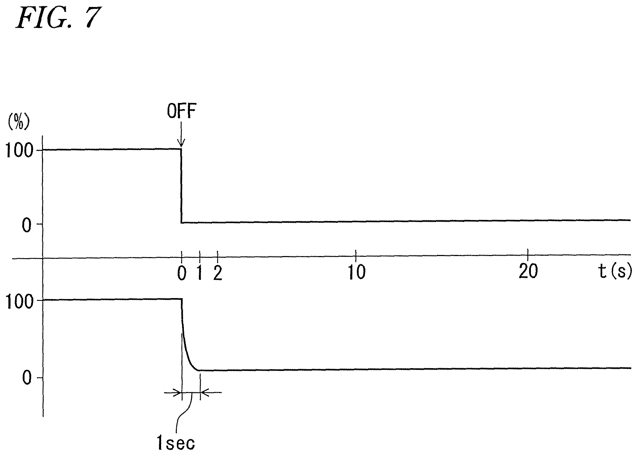

Further, in the motor control apparatus according to the embodiment, as shown in Figs. 6 and 7, the intended rotation number signal outputted from the engine control system 19 is inputted to the control portion 28. On this occasion, the first control signal b1 and the second control signal b2 having the aforementioned duty ratios for PWM control are retarded to prevent sudden voltage change at the time of changing over between the ON state and the OFF state due to so-called soft start control as shown in Fig. 6 and so-called soft stop control as shown in Fig. 7. Then, the first control signal b1 and the second control signal b2 are supplied to the PWM carrier generating portion 40.

In the motor control apparatus according to the embodiment, the retard processing during the soft start control or the soft stop control is canceled when either the first relay unit 17 or the second relay unit 27 is changed over between the ON state and the OFF state by the relay changeover portion 19b.

Next, description will be made on the operation and effect of the motor control apparatus according to the embodiment.

In this embodiment, in order to concurrently drive and rotate the two first and second motors 11 and 12 shown in Fig. 1, the selected first relay unit 17 is first turned ON by the relay changeover portion 19b of the engine control system 19.

As shown in Figs. 1 and 2, power is supplied from the battery power supply 16 to the input-side connector 24 of the fan control module 20 when the first relay unit 17 is turned ON. At the same time, the intended rotation number signal is sent from the engine control system 19 through the signal line 19a, the input-side connector 24 and the module-side input connector 20c to the interface portion 25 and the D/A conversion circuit 26, by which the intended rotation number signal is converted into a smoothed signal and then supplied to the control portion 28.

In the control portion 28, the first and second control signals b1 and b2 are generated and outputted to the first driver portion 31 and the second driver portion 32 respectively through the PWM carrier generating portion 40.

In the PWM carrier generating portion 40, a sawtooth wave f with a predetermined frequency is inputted together with the first and second control signals b1 and b2. By the first comparator 41 and the second comparator 42 inside the PWM carrier generating portion 40, the first PWM duty signal S1 and the second PWM duty signal S2 are generated as rectangular waves k with the same cycle and the same wavelength, and sent from the PWM carrier generating portion 40 to the first driver portion 31 and the second driver portion 32 respectively.

The first PWM duty signal S1 and the second PWM duty signal S2 generated as the rectangular waves k with the same cycle and in synchronization with each other are amplified by the first driver portion 31 and the second driver portion 32, and outputted as the first driving current m1 and the second driving current m2 to the brushes 9 and 9 of the first motor 11 and the second motor 12 through the module-side connectors 20a and 20b and the motor-side second connectors 23 and 23, respectively. The first driving current m1 and the second driving current m2 can rotationally drive the first motor 11 and the second motor 12 in synchronization with each other.

That is, the output duty ratios are set within a range of from 0% to 100% in accordance with the intended rotation number signal. On the other hand, in the first driver portion 31 and the second driver portion 32, the first driving current m1 and the second driving current m2 for variably controlling the rotation numbers of the first motor 11 and the second motor 12 are likewise applied to the brushes 9P and 9N of the first motor 11 and the brushes 9P and 9N of the second motor 12 in accordance with the temporal ratios between the ON state and the OFF state corresponding to the pulse widths of the output duty ratios supplied by the first driver portion 31 and the second driver portion 32 respectively. Thus, the first motor 11 and the second motor 12 can be rotationally driven with the same phase and with the same rotation number.

In the motor control apparatus according to the embodiment, as shown in Fig. 3, the first relay unit 17 is controlled to be ON over the lower speed rotation side range and the higher speed rotation side range. In addition, in the lower speed rotation side range, cooling fans pivotally supported on the rotating shafts of the first and second motors 11 and 12 are variably controlled within a rotation number range on the lower speed rotation side so that the first motor 11 and the second motor 12 are as high as about 15% to 50% of their maximum rotation numbers when the output duty ratios of the first driving current m1 and the second driving current m2 outputted from the first driver portion 31 and the second driver portion 32 are 30% to 90%, respectively.

By the fan control module 20, the rotation numbers of the first motor 11 and the second motor 12 on the lower speed rotation side are variably controlled while being accelerated gradually to the higher rotation direction. As soon as the rotation numbers reach 50% of their maximum rotation numbers, the output duty ratios are regarded as arriving at 90%. Thus, the first driving current m1 and the second driving current m2 supplied to the brushes 9 and 9 of the first motor 11 and the second motor 12 are temporarily suspended by the control portion 28.

When the second relay unit 27 is turned ON by the relay changeover portion 19b of the engine control system 19 as shown in Fig. 3, a reference current bm corresponding to 50% of the maximum rotation number of each first, second motor 11, 12 and equivalent to the control current having been supplied from the first relay unit 17 is applied to the brush pair 8 and 8 of the first, second motor 11, 12 by the second relay unit 27. Thus, the rotation number of each first, second motor 11, 12 is kept at about 50% of its maximum rotation number.

When the first relay unit 17 is changed over from the OFF state to the ON state by the relay changeover portion 19b, the output duty ratio is set to be lower than 30% but current conduction to the brushes 9 and 9 of each of the first motor 11 and the second motor 12 is not performed (in this embodiment, the duty ratio is set at 0% to suspend the first, second motor 11, 12).

When the second relay unit 27 is changed over from the OFF state to the ON state by the relay changeover portion 19b, the first relay unit 17 is kept ON and the output duty ratio is reduced from 90% and once suspended to be 0%. Once the second relay unit 27 has been changed over to the ON state, the rotation numbers of the first and the second motors 11 and 12 rotationally driving the cooling fans are controlled again variably on the higher speed rotation side in accordance with the output duty ratios of from 30% to 90% in the first driving current m1 and the second driving current m2 outputted from the first driver portion 31 and the second driver portion 32. On this occasion, the variable control is performed in the higher speed rotation range of from 65% to 100% when the maximum rotation numbers of the first motor 11 and the second motor 12 are 100%.

According to the embodiment, in this manner, the first driving current m1 and the second driving current m2 are not applied from the fan control module 20 to the first motor 11 and the second motor 12 respectively when the first relay unit 17 is changed over from the OFF state to the ON state and when the second relay unit 27 is changed over from the OFF state to the ON state. Thus, noise hardly occurs.

In addition, according to the embodiment, when the second relay unit 27 has been changed over, the reference current bm equivalent to the control current sent from the first relay unit 17 just before the suspension is applied to the brushes 8 and 8 of the first motor 11 and the second motor 12 by the second relay unit 27.

As a result, in the embodiment, the rotation numbers of the first and second motors 11 and 12 equal to the rotation numbers (about 50% of their maximum rotation numbers) obtained by the output duty ratio of 90% are kept as they are, as well as the inertia of the blowing fans or the like driven rotationally by the first and second motors 11 and 12, respectively. Thus, changeover can be performed smoothly.

Further, during the control of the motor rotation numbers in the higher speed rotation side range, the reference current bm is supplied to the brushes 8 and 8 of the first motor 11 and the second motor 12 by the second relay unit 27 changed over to the ON state where the second relay unit 27 can conduct the current.

The first driving current m1 and the second driving current m2 to be tuned with the reference current bm are then supplied again to the first motor 11 and the second motor 12 respectively through the first relay unit 17 together with the reference current bm as shown in Fig. 3. Thus, the rotation numbers of the blowing fans are variably controlled smoothly in the higher speed rotation side range in the same manner as the first driving current m1 and the second driving current m2 which variably control the rotation numbers of the first motor 11 and the second motor 12 on the lower speed rotation side.

That is, in the state where the reference current bm equivalent to the highest first driving current m1 and the highest second driving current m2 conducted by the first relay unit 17 in the lower speed rotation side range at the suspending time is applied, the first relay unit 17 is used again so that the rotation numbers of the first motor 11 and the second motor 12 on the higher speed rotation side can be controlled variably between about 65% and 100% of their maximum rotation numbers in accordance with increase/decrease (30% to 90%) of the duty ratios of the first and second control signals b1 and b2, respectively.

The control currents in this embodiment are applied between 0% and 100% in the output duty ratios of the first and second control signals b1 and b2. However, when the second relay unit 27 is changed over from the OFF state to the ON state, the first driving current m1 and the second driving current m2 variably controlled by the first and second control signals b1 and b2 and the reference current bm applied from the second relay unit 27 are prevented from flowing.

Thus, when the second relay unit 27 is changed over from the OFF state to the ON state, there is very little fear that noise is generated due to changeover or that there occurs a potential difference large enough to produce a change in the rotation numbers of the motors.

In addition, even immediately after the changeover, variable control of the first motor 11 and the second motor 12 can be resumed smoothly in the higher speed rotation side range by the first and second control signals b1 and b2.

When a large-capacity motor etc. is used or a plurality of motors, for example, two motors, that is, the first motor 11 and the second motor 12 are used, the work to be driven and controlled may be increased. Even in such a case, in addition to use of the reference current bm, the output duty ratios of the first and second control signals b1 and b2 are increased/decreased (30% to 90%) by the control portion 28 in the same fan control module 20 that has performed rotation control on the lower speed rotation side. Thus, output control can be achieved in the same manner as the rotation control in the lower speed rotation side range.

To this end, the first driver portion 31 and the second driver portion 32 whose output standard values are about 1/2 times as low as the maximum power energies of the first motor 11 and the second motor 12 respectively may be used so that the first and second motors 11 and 12 can be variably controlled smoothly between the lower speed rotation side and the higher speed rotation side without producing a change in the rotation numbers caused by changeover or without generating noise.

Thus, expensive driver portions which are high in output standard may be dispensed with so that increase in manufacturing cost can be suppressed.

In addition, the number of fan control modules 20 may be one if the fan control module 20 can perform similar variable control on the first and second motors 11 and 12 over both the lower speed rotation number range (0% to 50%) and the higher speed rotation number range (50% to 100%).

Thus, in a configuration where such a single fan control module 20 is used, the number of parts is not increased so that increase in the manufacturing cost can be suppressed.

Further, when the second relay unit 27 is connected to provide the base current bm by the relay changeover portion 19b provided in the engine control system 19, control currents PWM-controlled by the same fan control module 20 and sent from the first relay unit 17 having the same capacity may be sent so that rotation control in the higher rotation side variable rotation range (65% to 100%) can be achieved in the same manner as that in the lower speed rotation side variable rotation range (15% to 50%).

Consider current capacities required for the first relay unit 17 and the second relay unit 27 respectively. The reference current provided by the second relay unit 27 is also used at the time of changeover between the lower speed rotation side and the higher speed rotation side. Accordingly, the rotation numbers of the first motor 11 and the second motor 12 are increased by the power supplied to the brushes 8 and 8 of the motors so that the capacity of the first relay unit 17 can be reduced. For example, the first relay unit 17 and the second relay unit 27 whose capacities are about half as high as the maximum output may be used.

Thus, expensive relay units which are high in capacity may be dispensed with. In addition, it is not necessary to prepare a plurality of fan control modules 20 in accordance with the number of motors to be rotationally driven. It is therefore possible to obtain a motor control apparatus which can use a configuration of inexpensive parts to perform smooth rotation control.

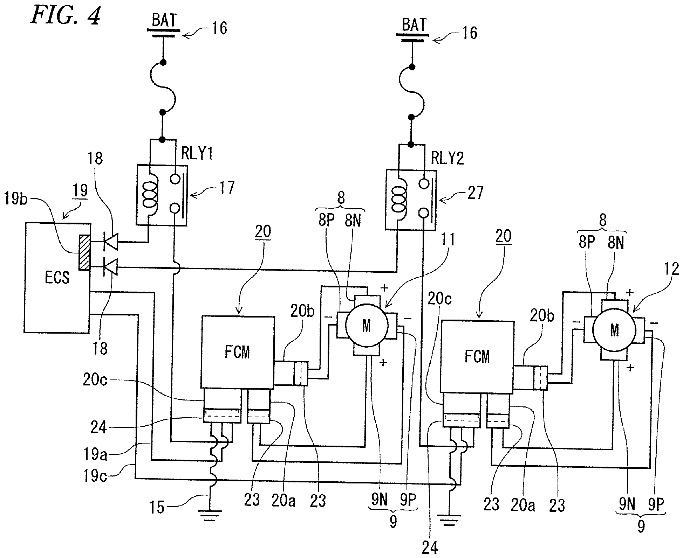

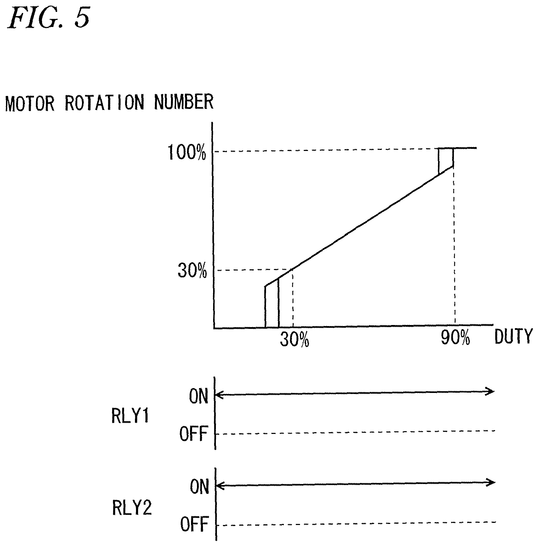

Here, a comparative example to the motor control apparatus according to the embodiment will be described with reference to Figs. 4 and 5. Portions the same as or equivalent to those in the embodiment will be referred to by the same numerals correspondingly in the following description.

In the motor control apparatus in this comparative example, as shown in Fig. 4, fan control modules 20 and 20 each having the aforementioned configuration are connected to the first motor 11 and the second motor 12 respectively. Not-shown first and second driver portions 31 and 32 similar to those in the configuration according to the embodiment shown in Fig. 2 are connected to the brushes 9 (9N and 9P) and 8 (8P and 8N) of the first motor 11 and the brushes 9 (9N and 9P) and 8 (8P and 8N) of the second motor 12 respectively and independently of each other.

An intended rotation number signal sent from the engine control system 19 is inputted through the signal line 19a and supplied to one fan control module 20 through the input-side connector 24 and the module-side input connector 20c, while an intended rotation number signal is inputted through the signal line 19c and supplied to the other fan control module 20 through the input-side connector 24 and the module-side input connector 20c.

In the fan control modules 20 and 20, the first and second control signals b1 and b2 are generated and sent to the first driver portion 31 and the second driver portion 32 substantially in the same manner as in the embodiment. The output duty ratios of the first and second control signals b1 and b2 are set within a range of from 0% to 100% in accordance with the intended rotation number signals respectively. Thus, rotation control is performed individually on the first motor 11 and the second motor 12 connected to the not-shown first and second driver portions 31 and 32 respectively, in accordance with pulse widths of the output duty ratios provided by the first and second driver portions 31 and 32.

In addition, the first relay unit 17 and the second relay unit 27 in Fig. 4 are always kept ON during the rotation number control (about 0% to 100% in duty ratio) as shown in Fig. 5. Each relay unit must take charge of a voltage load from the lower speed rotation side to the higher speed rotation side (about 30% to 100% in duty ratio) in the rotation number of each motor.

Further, though not shown, in the configuration of the fan control modules 20 and 20 in the comparative example, which is substantially similar to the configuration of the single fan control module 20 in the aforementioned embodiment, PWM carrier generating portions 40 and 40 each having the aforementioned configuration are provided internally in the fan control modules 20 and 20 and independently of each other, so as to generate rectangular waves k individually (see Fig. 2).

As a result, control signals made of rectangular waves k at different timings are outputted from the fan control modules 20 and 20 to the first motor 11 and the second motor 12 respectively. Thus, it is difficult to tune the rotations of the two, first and second motors 11 and 12 with each other or synchronize the rotation numbers of the first and second motors 11 and 12 with each other.

In addition, comparatively expensive parts with high output standards supporting the high outputs of the first and second motors 11 and 12 must be used for the first and second driver portions 31 and 32 or for the first and second relay units 17 and 27.

On the other hand, in the aforementioned embodiment, the first and second PWM duty signals S1 and S2 made of the rectangular waves k generated using the sawtooth waves f with the same frequency by the single PWM carrier generating portion 40 provided in the fan control module 20 are supplied to the first driver portion 31 and the second driver portion 32 concurrently. Thus, the first and second driving currents m1 and m2 synchronized with each other can be outputted.

Thus, it is possible to easily tune the rotations of the two, first and second motors 11 and 12 with each other or synchronize the rotation numbers of the two, first and second motors 11 and 12 with each other.

In this manner, control signals generated using the rectangular waves k generated by the same PWM carrier generating portion 40 are used for controlling the rotation numbers on the lower speed rotation side and the higher speed rotation side. That is, the control signals are shared between the respective variable ranges so that the two blowing fans can be tuned with each other easily not only when they are rotating at an equal speed but also when there occurs a fluctuation in the rotation numbers of the two blowing fans.

Accordingly, in the embodiment, the frequency band where noise may occur can be narrowed to suppress the spread of the noise band. It is therefore possible to further reduce the fear that the noise may interfere with, for example, a radio band or the like.

In addition, in the motor control apparatus according to the embodiment, when variable control is performed on the motor rotation numbers as to the rotation numbers on the higher speed rotation side where howling may occur easily, PWM control using the duty ratios is once suspended as shown in Fig. 3, and the second relay unit 27 is changed over to the ON state. Then, the first driving current m1 and the second driving current m2 corresponding to the duty ratios of the first control signal b1 and the second control signal b2 are outputted again from the fan control module 20 so as to allow the first motor 11 and the second motor 12 to rotationally drive the cooling fans.

Accordingly, the second relay unit 27 is smoothly changed over from the OFF state to the ON state, and the reference current bm supplied to the brushes 8 and 8 of the first and second motors 11 and 12 becomes equal to the latest first and second driving currents m1 and m2. Thus, the rotation numbers of the first and second motors 11 and 12 are increased to constant stable rotation numbers before variable control of the motor rotation numbers is started in the higher speed rotation side range.

Thus, the first motor 11 and the second motor 12 are already synchronized with the same rotation numbers so that PWM control on the higher speed rotation side can be started smoothly.

When the duty ratios are increased from 0%, both the first motor 11 and the second motor 12 can be synchronized easily, and occurrence of noise can be also suppressed.

In addition, the followability of the PWM control on the higher speed rotation side can be further improved so that the cooling fans rotationally driven by the first and second motors 11 and 12 can be tuned with each other easily even if the rotation numbers of the motors can be changed. Thus, resonance caused by an unexpected fluctuation in the rotation numbers can be prevented from occurring.

It is therefore possible to suppress the occurrence of unpleasant sound such as howling in a motor rotation range on the higher speed rotation side.

Further, in the motor control apparatus shown in the comparative example, in Fig. 4, the first relay unit 17 and the second relay unit 27 have to take charge of the voltage loads of the first motor 11 and the second motor 12 connected thereto respectively, all over the range (about 0% to 100% in duty ratio) where the rotation numbers thereof should be controlled individually. Thus, there may be a problem that expensive relay units which are proof against large-capacity loads have to be used, or the maximum electric energy to be consumed has to be reduced, for example, by narrowing the variable-control range where the rotation numbers should be controlled.

On the other hand, in the embodiment, the reference current bm can be increased to the neighborhood of the maximum allowable load of the first relay unit 17 before the second relay unit 27 is changed over from the OFF state to the ON state.

Due to the reference current bm, as shown in Fig. 3, PWM control is then started at the start point where the rotation numbers of the motors are about 50% (corresponding to about 90% in duty ratio) of their maximum rotation numbers. The PWM control rises from the duty ratio of 0% with the rotation numbers of the motors in synchronization with each other. Till the duty ratio reaches about 90% and the rotation numbers of the motors reach the maximum rotation numbers, the rotation numbers of the motors can be variably controlled easily while being kept in synchronization with each other.

Accordingly, expensive relay units which are proof against high-capacity loads do not have to be used, but the motor control apparatus can be configured using the first relay unit 17 and the second relay unit 27 whose capacities are about half and which are inexpensive.

In addition, by use of the single fan control module 20, rotation number control on the higher speed rotation side can be performed by PWM control in the same manner as rotation number control on the lower speed rotation side. Thus, the number of parts can be reduced as compared with that in the comparative example shown in Fig. 4. In this respect, it is possible to suppress increase in manufacturing cost.

In addition, noise generated by rotations of blowing fans or the like rotationally driven by two or more motors, e.g. the first and second motors 11 and 12 in this embodiment, can be collected within a desired acoustic range. Thus, the width of the noise frequency band can be reduced. When an effective vibration-proof structure is used in the narrow noise frequency band, the sound insulation performance can be improved. Thus, sound-proofing or vibration-proofing measures can be taken easily.

In the motor control apparatus according to the embodiment, soft start control or soft stop control on the first relay unit 17 and the second relay unit 27 is canceled by the control portion 28 when either the first relay unit 17 or the second relay unit 27 is changed over between the ON state and the OFF state by the relay changeover portion 19b.

As a result, when either the first relay unit 17 or the second relay unit 27 is changed over between the ON state and the OFF state by the relay changeover portion 19b of the engine control system 19, that is, when the first or second relay unit 17 or 27 is changed over while the duty ratios (30% to 90%) are being increased (or at the time point when the duty ratios reach about 90%) as shown in Fig. 3, the soft start control or the soft stop control is canceled to be disabled from operating.

Thus, overshoot or undershoot that may occur in the output fluctuation promoted at the changeover time by the soft start control or the soft stop control is suppressed, and switching noise is also suppressed. Further, the rotational driving of the motors can be controlled smoothly.

### [first example]

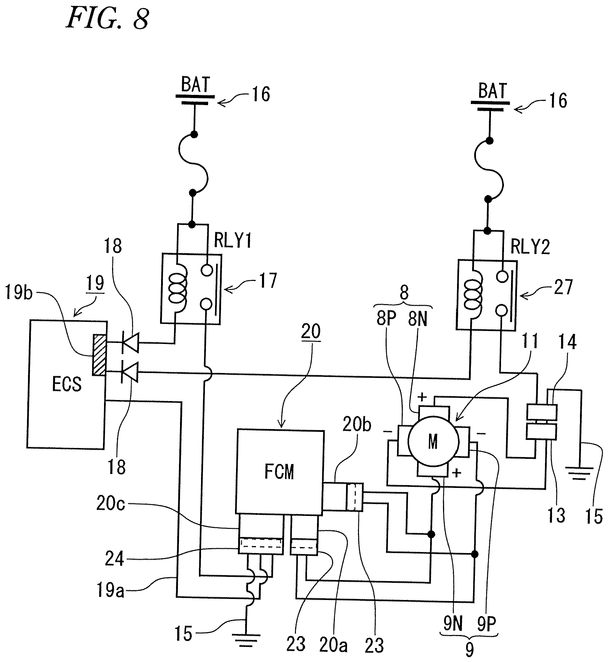

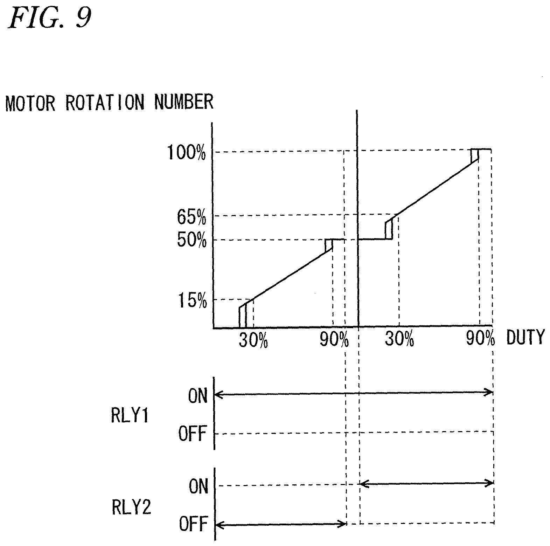

Figs. 8 and 9 show a motor control apparatus in a first example of the embodiment of the invention.

Portions the same as or equivalent to those in the motor control apparatus according to the embodiment will be referred to by the same numerals correspondingly in the following description.

In the motor control apparatus in the first example, the first motor 11 having two pairs of brushes 8 and 9 (8P, 8N and 9P, 9N) is provided alone.

The first driver portion 31 of the fan control module 20 as shown in Fig. 2 is connected to the brushes 9P and 9N of the first motor 11 through the module-side connector 20b and the motor-side second connector 23, while the second driver portion 32 is also connected to the brushes 9P and 9N through the module-side connector 20b and the motor-side second connector 23.

Next, the operation and effect of the motor control apparatus in the first example will be described.

In the motor control apparatus in the first example, the first motor 11 is rotationally driven in addition to the operation and effect of the motor control apparatus according to the aforementioned embodiment. To this end, first, the first relay unit 17 selected by the relay changeover portion 19b of the engine control system 19 is turned ON.

Then, when the first relay unit 17 is turned ON, as shown in Fig. 9, electric power is supplied from the battery power supply 16 shown in Fig. 1 to the input-side connector 24 connected to the fan control module 20. In addition, an intended rotation number signal is sent from the engine control system 19 to the input-side connector 24 and the module-side input connector 20c through the signal line 19a, and supplied to the interface portion 25, the D/A conversion circuit 26 and the control portion 28, in the same manner as in Fig. 2.

Then, a first control signal b1 is set from the not-shown control portion to the first driver portion 31 through the PWM carrier generating portion 40, while a second control signal b2 is sent to the second driver portion 32 through the PWM carrier generating portion 40 with the same cycle and the same wavelength as those of the first control signal b1.

The first and second control signals b1 and b2 like rectangular waves k are outputted from the PWM carrier generating portion 40, and synchronized with the same wavelength due to a sawtooth wave f generating a synchronization signal.

That is, the first relay unit 17 kept ON is once suspended in the state where the output duty ratios for increasing the rotation numbers of the motors is 90% in Fig. 9. Then, the output duty ratios become 0%. When the second relay unit 27 is changed over from the OFF state to the ON state, the output ratios are controlled variably from 0% to 90% in the higher speed rotation side range again by similar first and second control signals b1 and b2 outputted from the first driver portion 31 and the second driver portion 32.

On this occasion, the first driving current m1 and the second driving current m2 may be supplied to the brushes 9P and 9N of the first motor concurrently based on the first and second control signals b1 and b2 for PWM control. Even in this case, the first and second driving currents m1 and m2 are generated from rectangular waves k with the same cycle and the same wavelength so as to serve as sync signals generated by the same PWM carrier generating portion 40. Thus, the first and second driving currents m1 and m2 can be synchronized easily so that the rotationally driving control of the first motor 11 can be kept efficient and smooth.

Thus, a larger-capacity and higher-power motor or the like can be used as the first motor 11.

In addition, when a first motor 11 large in capacity is used, the same fan control module 20 for performing rotation control in the lower speed rotation side range can be used also for rotation control in the higher speed rotation side range together with the reference current bm so as to perform variable control to increase/decrease the output duty ratio (30% to 90%) even if the work to be driven and controlled increases.

Thus, when the configuration of the single fan control module 20 is used, it is not necessary to increase the number of parts.

In addition, the required standard values of the current capacities required for the first relay unit 17 and the second relay unit 27 respectively can be reduced. It is therefore possible to provide a motor control apparatus which can perform smooth rotational driving control even if the increase of the manufacturing cost is suppressed.

The other configuration, operation and effect are the same as those of the motor control apparatus according to the aforementioned embodiment, and description thereof will be therefore omitted.

The motor control apparatus according to the embodiment of the invention and its example have been described above in detail with reference to the drawings. Specific configuration is not limited to those of the motor control apparatus according to the embodiment and the example. Design changes are included in the invention without departing from the scope of the invention.

For example, the aforementioned embodiment has been described with a configuration where two motors, that is, the first motor 11 and the second motor 12 are used. The invention is not limited thereto particularly, but, for example, three or more motors may be provided, and the shapes of the motors, the number of the motors and the driving forms of the motors are not limited particularly.

The motor control apparatus according to the embodiment is preferably applied to a vehicle with cooling fans. Particularly, applications of the invention are not limited to automobile engines or heat exchangers with sources of power using internal combustion engines. The invention may be applied to control of driving motors for use in various portions, for example, applications using motors whose rotation numbers need to be controlled, such as batteries or running drive sources of electric motorcars or hybrid cars with a plurality of sources of power, or cooling of driving circuits, etc.

## Claims

1. A system for motor control comprising:
a motor (M) that includes a plurality of pairs of brushes (8, 9);
a control module (20) that supplies control currents to the pairs of brushes (9) correspondingly;
**characterized in that the system further comprises:**
a plurality of relay units (17, 27) being a first relay unit (17) that switches between a rotating state and a stopping state of the motor (M) and a second relay unit (27) that changes a rotation number of the motor (M) between a lower speed rotation and a higher speed rotation and the first (17) and second (27) relay units connect and disconnect the control currents supplied from the control module (20)
so that
when each of the relay units (17, 27) is in an ON state where the relay unit connects a control current, the relay unit (17, 27) applies the control current to any one of the pairs of brushes to thereby generate a rotationally driving force, and
when the relay unit (17, 27) is in an OFF state where the relay unit (17, 27) disconnects the control current, the relay unit (17, 27) suspends the control current; and
a relay changeover portion (19b) that changes over between the ON state and the OFF state of the first and second relay units (17, 27),
wherein, when one of the relay units (17, 27) is changed over between the ON state and the OFF state by the relay changeover portion (19b) so as to select a pair of brushes (8, 9) to which a current is to be applied, the control module (20) changes over the second relay unit (27) to a current-conductive state while temporarily suspending a control current from the first relay unit (17), so that a reference current equivalent to the control current which has been applied to the first relay unit (17) is supplied from the second relay unit (27) while a control current for variably controlling a rotation number of the motor together with the reference current is outputted from the first relay unit (17).

2. The system for motor control according to Claim 1,
further comprising a plurality of motors (M),
wherein the control module (20) comprises a waveform generating portion (40) that generates waveforms with the same cycle,
wherein each of the plurality of motors (M) is connected so that control currents obtained by the waveform generating portion (40) are supplied to the motors (M) respectively,

3. The system for motor control according to Claim 1,
wherein the control module (20) has soft start control function or soft stop control function, and cancels the soft start control or the soft stop control when one of the relay units (17, 27) is changed over between the ON state and the OFF state by the relay changeover portion (19b).

## Patentansprüche

1. Ein System zur Motorsteuerung, aufweisend:
einen Motor (M), der eine Vielzahl von Bürstenpaaren (8, 9) enthält;
ein Steuermodul (20), das den Bürstenpaaren (9) Steuerströme entsprechend zuführt;
**dadurch gekennzeichnet, dass** das System weiterhin aufweist:
eine Vielzahl von Relaiseinheiten (17, 27), welche eine erste Relaiseinheit (17), die zwischen einem rotierenden Zustand und einem Unterbrechungszustand des Motors (M) umschaltet, und eine zweite Relaiseinheit (27), die eine Drehzahl des Motors (M) zwischen einer niedrigeren Drehgeschwindigkeit und einer höheren Drehgeschwindigkeit wechselt, sind, und die ersten (17) und zweiten (27) Relaiseinheiten verbinden und trennen die vom Steuermodul (20) zugeführten Steuerströme, sodass, wenn jede der Relaiseinheiten (17, 27) in einem An-Zustand ist, in dem die Relaiseinheit einen Steuerstrom verbindet, die Relaiseinheit (17, 27) den Steuerstrom an irgendeines von den Bürstenpaaren anlegt, um dadurch eine rotatorische Antriebskraft zu erzeugen, und
wenn die Relaiseinheit (17, 27) in einem Aus-Zustand ist, in dem die Relaiseinheit (17, 27) den Steuerstrom trennt, die Relaiseinheit (17, 27) den Steuerstrom unterbricht; und
einen Relaisumschaltabschnitt (19b), der zwischen dem An-Zustand und dem Aus-Zustand der ersten und zweiten Relaiseinheiten (17, 27) umschaltet,
wobei, wenn eine der Relaiseinheiten (17, 27) durch den Relaisumschaltabschnitt (19b) so zwischen dem An-Zustand und dem Aus-Zustand umgeschaltet wird, um ein Paar der Bürsten (8, 9) anzusteuern, an das ein Strom anzulegen ist, schaltet das Steuermodul (20) die zweite Relaiseinheit (27) in einen Strom leitenden Zustand um, während es zeitweise einen Steuerstrom von der ersten Relaiseinheit (17) unterbricht, sodass ein Referenzstrom gleichwertig zu dem Steuerstrom, der an die erste Relaiseinheit (17) angelegt wurde, von der zweiten Relaiseinheit (27) zugeführt wird, während ein Steuerstrom zum variablen Steuern einer Drehzahl des Motors zusammen mit dem Referenzstrom von der ersten Relaiseinheit (17) ausgegeben wird.

2. Das System zur Motorsteuerung gemäß Anspruch 1,
weiterhin aufweisend eine Vielzahl von Motoren (M),
wobei das Steuermodul (20) einen Wellenformerzeugungsabschnitt (40) aufweist, der Wellenformen mit dem selben Zyklus erzeugt,
wobei jeder der Vielzahl von Motoren (M) so verbunden ist, dass durch den Wellenformerzeugungsabschnitt (40) erhaltene Steuerströme den Motoren (M) jeweils zugeführt werden.

3. Das System zur Motorsteuerung gemäß Anspruch 1,
wobei das Steuermodul (20) eine sanfte Anlaufsteuerfunktion oder eine sanfte Unterbrechungssteuerfunktion hat, und die sanfte Anlaufsteuerung oder die sanfte Unterbrechungssteuerung aufhebt, wenn eine der Relaiseinheiten (17, 27) durch den Relaisumschaltabschnitt (19b) zwischen dem An-Zustand und dem Aus-Zustand umgeschaltet wird.

## Revendications

1. Système pour un contrôle de moteur comprenant :
un moteur (M) qui inclut une pluralité de paires de balais (8, 9) ;
un module de contrôle (20) qui fournit des courants de contrôle aux paires de balais (9) respectivement ;
**caractérisé en ce que le système comprend en outre** :
une pluralité d'unités de relais (17, 27) constituant une première unité de relais (17) qui commute entre un état de rotation et un état d'arrêt du moteur (M) et une deuxième unité de relais (27) qui change un nombre de rotations du moteur (M) entre une rotation à vitesse inférieure et une rotation à vitesse supérieure et les première (17) et deuxième (27) unités de relais connectent et déconnectent les courants de contrôle fournis à partir du module de contrôle (20)
de sorte que
lorsque chacune des unités de relais (17, 27) est dans un état MARCHE où l'unité de relais connecte un courant de contrôle, l'unité de relais (17, 27) applique le courant de contrôle à l'une quelconque des paires de balais pour ainsi générer une force d'entraînement en rotation, et
lorsque l'unité de relais (17, 27) est dans un état ARRÊT où l'unité de relais (17, 27) déconnecte le courant de contrôle, l'unité de relais (17, 27) interrompt le courant de contrôle ; et
une partie d'inverseur de relais (19b) qui bascule entre l'état MARCHE et l'état ARRÊT des première et deuxième unités de relais (17, 27),
dans lequel, lorsqu'une des unités de relais (17, 27) est basculée entre l'état MARCHE et l'état ARRÊT par la partie d'inverseur de relais (19b) de sorte à sélectionner une paire de balais (8, 9) à laquelle un courant doit être appliqué, le module de contrôle (20) bascule la deuxième unité de relais (27) vers un état conducteur de courant tout en suspendant temporairement un courant de contrôle issu de la première unité de relais (17), de sorte qu'un courant de référence équivalent au courant de contrôle qui a été appliqué à la première unité de relais (17) soit fourni à partir de la deuxième unité de relais (27) tandis qu'un courant de contrôle pour un contrôle de manière variable d'un nombre de rotations du moteur conjointement avec le courant de référence est produit à partir de la première unité de relais (17).

2. Le système pour un contrôle de moteur selon la revendication 1,
comprenant en outre une pluralité de moteurs (M),
dans lequel le module de contrôle (20) comprend une partie de génération de formes d'onde (40) qui génère des formes d'onde avec le même cycle,
dans lequel chacun de la pluralité de moteurs (M) est connecté de sorte que des courants de contrôle obtenus par la partie de génération de forme d'onde (40) sont fournis aux moteurs (M) respectivement.

3. Le système pour un contrôle de moteur selon la revendication 1,
dans lequel le module de contrôle (20) présente une fonction de démarrage progressif ou une fonction d'arrêt progressif, et annule le contrôle de démarrage progressif ou le contrôle d'arrêt progressif lorsqu'une des unités de relais (17, 27) est basculée entre l'état MARCHE et l'état ARRÊT par la partie de basculement de relais (19b).
